# EUROPÄISCHE PATENTANMELDUNG

(11) **EP 1 843 069 A1**
(43) Veröffentlichungstag der Anmeldung: **10.10.2007**
(21) Anmeldenummer: 06007204.8
(22) Anmeldetag: 05.04.2006
(51) Int. Cl.: F16K 37/00

(54) **Absperrvorrichtung mit Anzeigeeinrichtung**

(71) Anmelder: Georg Fischer TPA S.r.l., 40013 Castelmaggiore BO (IT)
(72) Erfinder: Falsetta, Michele, 16036 Recco (GE) (IT); Peuker, Christian, 13407 Berlin (DE)
(74) Vertreter: Weiss, Wolfgang

(57) **Zusammenfassung**

Es wird eine Absperrvorrichtung (10) mit einer Anzeigeeinrichtung (20) vorgeschlagen umfassend ein Ventilgehäuse (3) mit mindestens zwei Anschlussbereichen (6) zum Anschliessen an mediumsführenden Rohrleitungen, ein im Ventilgehäuse (3) zwischen den Anschlussbereichen (6) um einer senkrecht zur Strömungsrichtung verlaufenden Achse (X) drehbar gelagertes Absperrglied (1) und ein im Ventilgehäuse (3) um die Drehachse (X) drehbar gelagertes und mit dem Absperrglied (1) verbindbares Verbindungsglied (7), wobei das Verbindungsglied (7) bei der Drehbewegung des Absperrgliedes (1) von einer ersten geöffneten Stellung zu einer zweiten geschlossenen Stellung einen Drehwinkel von etwa 90° beschreibt und wobei das Verbindungsglied (7) eine um die Drehachse (X) verlaufende im Wesentlichen zylindrisch ausgebildete und zum Absperrglied (1) hin offenen Ausnehmung (11) aufweist.

## Beschreibung

Die Erfindung bezieht sich auf eine Absperrvorrichtung mit einer Anzeigeeinrichtung umfassend ein Ventilgehäuse mit mindestens zwei Anschlussbereichen zum Anschliessen an mediumsführenden Rohrleitungen, ein im Ventilgehäuse zwischen den Anschlussbereichen um einer senkrecht zur Strömungsrichtung verlaufenden Achse drehbar gelagertes Absperrglied und ein im Ventilgehäuse um die Drehachse drehbar gelagertes und mit dem Absperrglied verbindbares Verbindungsglied, wobei das Verbindungsglied bei der Drehbewegung des Absperrgliedes von einer ersten geöffneten Stellung zu einer zweiten geschlossenen Stellung einen Drehwinkel von etwa 90° beschreibt.

Im Rohrleitungsbau werden Rohrleitungen abgesperrt mit Ventilen, die manuell oder motorisch betätigt werden. Bei Ventilen, die mit Fremdenergie betätigt werden, und/oder bei Ventilen, die schlecht zugänglich angeordnet sind, kann die Ventilstellung nicht immer deutlich erkannt werden. Bei von Hand betätigten Ventilen kann die Stellung des Absperrgliedes oft abgeleitet werden aus der Stellung des Handgriffes. Aus der Stellung des Absperrgliedes alleine kann jedoch nicht abgeleitet werden, ob die Rohrleitung mit Medium gefüllt ist oder nicht. Hierzu werden üblicherweise Durchflusswächter vor oder hinter dem Ventil in der Rohrleitung eingebaut.

Aus der EP 92 714 B1 ist eine Stellungsanzeigeeinrichtung für ein pneumatisch betätigtes Drehklappenventil bekannt. Die Ventilspindel ragt mit einem Ende an der Oberseite des Ventils aus dem Betätigungsgehäuse heraus. Das Spindelende ist in einem weiteren hut- oder zylinderförmigen Gehäuse oberhalb des Betätigungsgehäuses angeordnet. Das hutförmige Gehäuse ist aus einem durchsichtigen Material hergestellt. Am Umfang des Spindelendes und an der Innenseite des hutförmigen Gehäuses sind mit Farbe oder einer anderen Beschichtung Schachbrettmuster abgebildet. Durch die Drehbewegung der Spindel um 90° werden die Schachbrettmuster entweder nebeneinander angeordnet oder mit einander in Deckung gebracht. Wenn das Schachbrettmuster ausreichend gross und/oder in deutlich sichtbaren Signalfarben ausgebildet wird, kann die Ventilstellung des Drehklappenventils aus grösserer Entfernung beobachtet werden. Die Anzeige ist direkt gekoppelt mit der Bewegung der Ventilspindel.

Ausgehend von diesem Stand der Technik ist es Aufgabe der Erfindung, eine Absperrvorrichtung mit einer Anzeigeeinrichtung anzugeben, die, ohne zusätzlichen Einrichtungen in der Rohrleitung, gleichzeitig die Anzeige der Stellung des Absperrgliedes und die Anzeige der Anwesenheit des Mediums in der Rohrleitung möglich macht.

Diese Aufgabe wird gelöst durch eine Absperrvorrichtung mit einer Anzeigeeinrichtung umfassend ein Ventilgehäuse mit mindestens zwei Anschlussbereichen zum Anschliessen an mediumsführenden Rohrleitungen, ein im Ventilgehäuse zwischen den Anschlussbereichen um einer senkrecht zur Strömungsrichtung verlaufenden Achse drehbar gelagertes Absperrglied und ein im Ventilgehäuse um die Drehachse drehbar gelagertes und mit dem Absperrglied verbindbares Verbindungsglied, wobei das Verbindungsglied bei der Drehbewegung des Absperrgliedes von einer ersten geöffneten Stellung zu einer zweiten geschlossenen Stellung einen Drehwinkel von etwa 90° beschreibt, wobei das Verbindungsglied eine um die Drehachse verlaufende im Wesentlichen zylindrisch ausgebildete und zum Absperrglied hin offenen Ausnehmung aufweist.

Bevorzugte Weiterbildungen der Erfindung ergeben sich aus den abhängigen Ansprüchen.

Es ist von Vorteil, dass die Anzeigeeinrichtung auch bei abgenommenem Handgriff, d.h. ohne Betätigungsglied verwendet werden kann. Dies wird dadurch erreicht, dass in der Ausnehmung im Verbindungsglied als Anzeigeeinrichtung ein Schwimmkörper angeordnet ist.

Es ist auch von Vorteil dass die Anzeigeeinrichtung auch beim geschlossenen Absperrglied zur Anzeige der Anwesenheit des Mediums verwendet werden kann. Die wird dadurch erreicht, dass das Absperrglied eine weitere Verbindungsbohrung senkrecht zur ersten Bohrung aufweist.

Der Grundgedanken der Erfindung ist es in einem Rohrleitungssystem, beispielsweise bei einem Kugelhahn, ohne zusätzlichen Installationen eine Anzeige der Strömungs- und Druckverhältnisse zu entwickeln, die unabhängig von der Bewegung des Betätigungsgliedes funktioniert, die ohne Zusatzinstallationen in bestehenden Absperrvorrichtungen integriert werden kann und die auch in relativ grosser Entfernung möglichst gut sichtbar ist.

Ein Ausführungsbeispiel der Erfindung wird anhand der Figuren beschrieben. Es zeigen:
Figur 1 eine Sicht auf eine erfindungsgemässe Absperrvorrichtung mit einer Anzeigeeinrichtung,
Figur 2 eine weitere Sicht auf das Absperrglied und das Verbindungsglied zwischen dem Absperrglied und dem Betätigungsglied von Figur 1,
Figur 3 einen Schnitt entlang der Linie A-A von Figur 2 und
Figur 4 eine Sicht auf dem Schwimmkörper der Anzeigeeinrichtung.

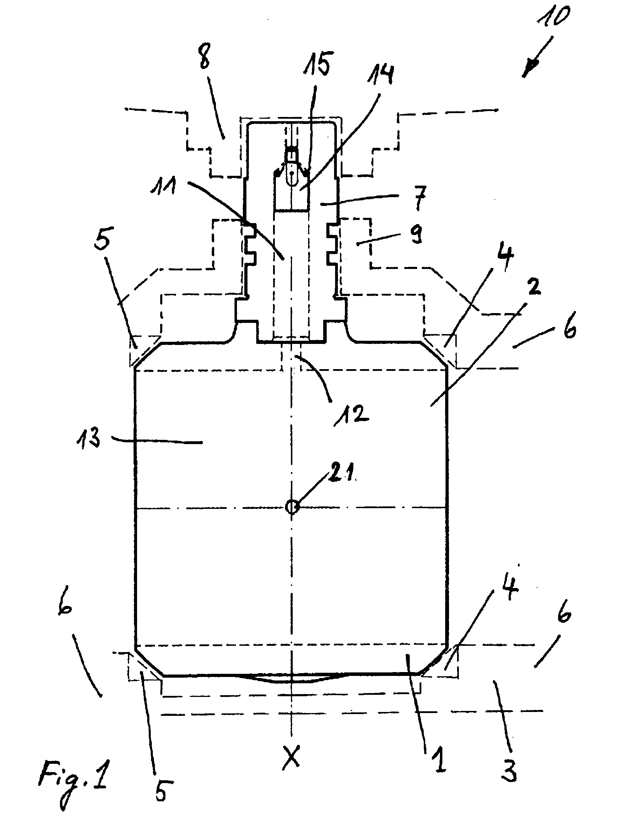

In Figur 1 ist schematisch ein Teil einer Absperrvorrichtung 10 mit einer Anzeigeeinrichtung 20 dargestellt. In Figur 1 ist ein Absperrglied 1, hier ein Kugelküken 2 eines Kugelhahnes senkrecht zur Strömungsrichtung gesehen dargestellt. Das Kugelküken 2 ist um eine Drehachse X, ebenfalls senkrecht zur Srömungsrichtung drehbar gelagert angeordnet. Mit Strichlinien ist schematisch ein Ventilgehäuse 3 mit Dichtungsanordnungen 4,5 angedeutet. Das Absperrglied ist im Ventilgehäuse 3 zwischen den Dichtungen 4,5 drehbar gelagert. Das Ventilgehäuse 3 weist auf beiden Seiten einen Anschlussbereich 6 zum Anschliessen an einer mediumsführenden Rohrleitung auf. An der Oberseite des Kugelkükens 2 ist ein Verbindungsglied 7 zwischen dem Kugelküken 2 und einem schematisch dargestellten Betätigungsglied 8, angeordnet. Das Verbindungsglied 7, oder die Ventilspindel 7, ist verdrehsicher mit dem Kugelküken 2 verbunden und in einem Halsbereich 9 des Ventilgehäuses 3 drehbar gelagert.

Die Ventilspindel 7 weist eine zylindrisch ausgebildete Ausnehmung 11 auf. Die Ausnehmung verläuft in der Richtung der Drehachse X und ist gegen unten offen. Im Kugelküken 2 ist eine weitere Bohrung 12 ausgebildet. Die Bohrung 12 bildet einen Kanal für das Medium, dass im geöffneten Zustand durch das Absperrglied 1 hindurch strömt. Weil die Bohrung 12 und die Ausnehmung 11 beide in der Richtung der Drehachse X angeordnet sind, ist unabhängig von der Stellung des Absperrgliedes 7, auch im geschlossenen Zustand des Absperrgliedes 1 die Verbindung von der Ausnehmung 11 zum Mediendurchlass 13 des Kugelkükens 3 gewährleistet. Oben in der Ausnehmung 11 ist ein Schwimmkörper 14 schematisch dargestellt.

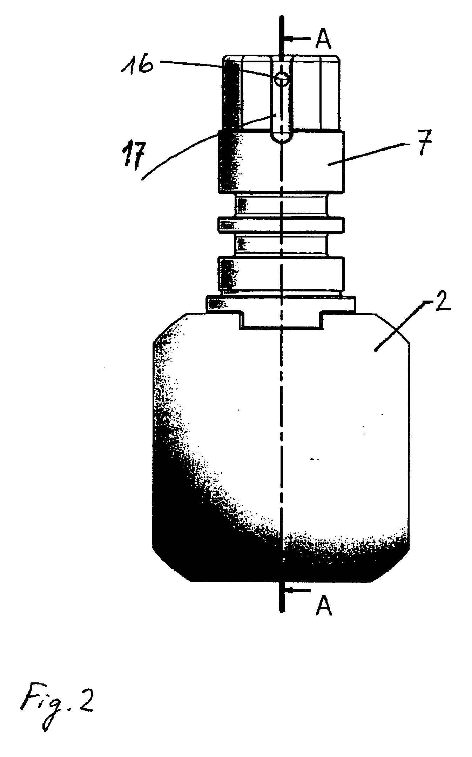

In Figur 2 ist eine weitere Sicht auf einem Absperrglied, hier einem Kugelküken 2 zusammen mit einer Ventilspindel 7 dargestellt. Die Ventilspindel 7 weist am oberen Ende eine Bohrung 16 auf, die senkrecht zur Drehachse X verlaufend angeordnet ist und mit der Ausnehmung 11 in Verbindung steht. Die Bohrung 16 dient als Überlauf oder Ausgang für das Medium und/oder die Luft, welche bei der Bewegung des Schwimmkörpers 14 nach oben in der Ausnehmung 11 der Spindel 7 verdrängt werden. Auf der Aussenseite der Spindel 7 mündet die Überlaufbohrung 16 in einem Kanal 17 mit einem U-förmigen Querschnitt. Dieser Kanal 17 gewährleistet, dass das Medium auch bei aufgestecktem Betätigungsglied 8 abfliessen kann. Die Überlaufbohrung 16 verläuft senkrecht zur Drehachse X der Ventilspindel 7, dasheisst parallel zur Rohrleitungsachse. Die Überlaufbohrung 16 anschliessend an der Ausnehmung 11 verhindert, dass die Ausnehmung 11 von Aussen verschmutzt und verstopft wird.

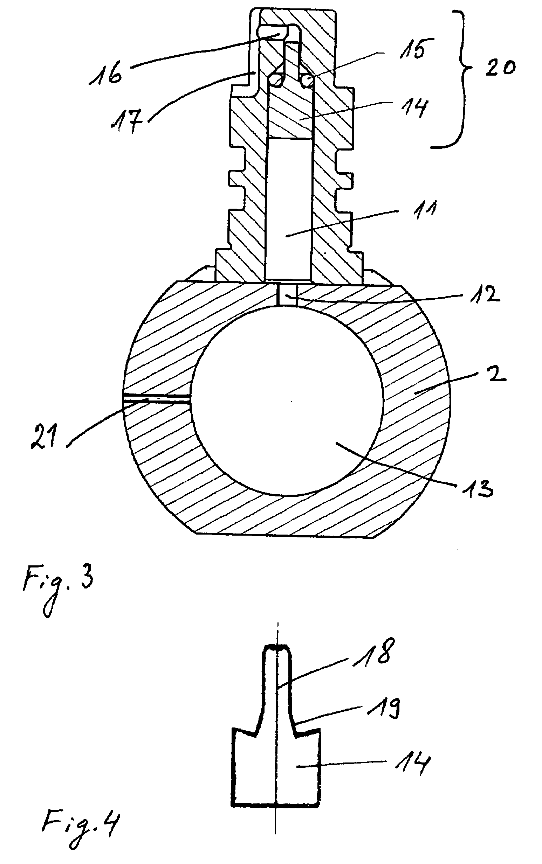

Figur 3 zeigt einen Schnitt entlang der Linie A-A von Figur 2. In der Ausnehmung 11 ist der Schwimmkörper 14 dargestellt. Der Schwimmkörper 14 ist in der Richtung der Drehachse X in der Ausnehmung 11 frei bewegbar, das heisst drehbar um die X-Achse und linear verschiebbar, angeordnet. In Figur 2 ist der Schwimmkörper 14 in der Ausnehmung 11 in der obersten Lage, d.h. in einer mit dem Mediumsdruck belasteten Stellung, dargestellt. An der oberen Seite des Schwimmkörpers 14 ist eine O-Ringdichtung 15 ersichtlich, die als Anschlag und Dichtung für den Schwimmkörper 14 am Ende der Ausnehmung 11 dient. Die O-Ringdichtung 15 verhindert, dass in der oberen Stellung des Schwimmkörpers 14 Medium aus der Rohrleitung verloren geht.

In Figur 4 ist der Schwimmkörper 14 für sich alleine dargestellt. Der Schwimmkörper 14 ist rotationssymmetrisch ausgebildet und weist eine besondere Form auf. Der Schwimmkörper 14 weist am oberen Ende einen Vorsprung 18 auf, der die Aufnahme und die Führung des Schwimmkörpers 14 In die Ausnehmung 11 der Spindel 7 vereinfacht und sicher stellt. Weiter weist der Schwimmkörper 14 eine Nut 19 auf die V-förmig ausgebildet Ist, und die die dichtende Aufnahme der O-Ringdichtung 15 gewährleistet. Die Ausnehmung 11 aus der Ventilspindel 7, insbesondere der obere Teil, der den Vorsprung 18 aufnimmt, wurde so ausgelegt, dass der Venturi-Effekt bei der Bewegung des Schwimmkörpers 14 in die Ausnehmung 11 reduziert oder unterdrückt wird. Hiermit wird gewährleistet, dass lediglich eine sehr kleine Menge des Mediums, etwa soviel wie das Volumen des Schwimmkörpers 14, aufgewendet werden muss um die Bewegung des Schwimmkörpers 14 in die Ausnehmung 11 zu ermöglichen. Die Anzeigeeinrichtung 20 führt somit nicht zu einem grösseren Mediumsverlust. Die Menge des in die Überlaufbohrung 16 austretenden Mediums ist so gering, dass die äussere Umgebung des Ventils nicht belastet wird.

Die Ventilspindel 7 ist, zumindest in dem Bereich zwischen dem Ventilgehäuse 3 und dem Betätigungsglied 8, aus einem durchsichtigen Material hergestellt. Die Sichtbarkeit der Anzeigeeinrichtung 20 wird erhöht, wenn der Schwimmkörper 14 in einer deutlich sichtbaren Farbe, wie beispielsweise gelb, orange oder rot ausgeführt wird.

Wenn das Kugelküken 3 geschlossen wird, bleibt eine Restmenge des geförderten Mediums im Mediendurchlass 13 stehen. Weil normalerweise vor dem Absperrglied 1 einen höheren Druck herrscht als nach dem Absperrglied 1, bewirkt der Mediendruck, dass der Schwimmkörper 14 bis zur vollständigen Schliessung des Ventils in der obersten Stellung in der Ausnehmung 11 bleibt. Wenn in dem Kugelküken 3 auf einer Seite eine kleine zweite Verbindungsbohrung 21 senkrecht zur ersten Bohrung 12 ausgebildet wird, kann gewährleistet werden, dass in der Ausnehmung 11 immer der gleiche Mediumsdruck herrscht wie in der Rohrleitung vor dem Ventil.

Mit der hier beschriebenen Anzeigeeinrichtung 20 kann auf einfache Art und Weise aus grosser Distanz, und von allen Seiten rundum das Ventil beobachtet werden, ob in der Rohrleitung strömendes und/oder unter Druck stehendes Medium vorhanden ist. Mit der Anzeigeeinrichtung 20 kann, unabhängig von der Stellung und/oder der Anwesenheit des Betätigungsgliedes 8, eine Aussage über die Stellung des Absperrgliedes 1 gemacht werden. Die lineare Bewegung des Schwimmkörpers 14 in der Richtung der Drehachse X ist unabhängig von der Drehbewegung der Ventilspindel 7 um die Drehachse X. Die Anzeige funktioniert auch bei abgenommenen Handgriff 8 oder wenn die Betätigung des Ventils von einem Motor gesteuert wird. Die Anzeigevorrichtung 20 kann auch bei allen anderen Absperrgliedern 1, die mit einer Spindel zur Betätigung versehen sind, ausgebildet werden.

Die Anzeigeeinrichtung 20 ist besonders geeignet für die Anzeige der Ventilstellung und des Durchflusses bei Rohrleitungssystemen, beispielsweise in der Landwirtschaft oder in der Wasserbehandlung. Die Anzeigeeinrichtung kann überall eingesetzt werden, wo weder elektrischer Strom oder sonstige Hilfsmittel zur Signalisierung des Durchflusses zur Verfügung stehen und wo die visuelle Kontrolle ausreichend ist.

Die in der Absperrvorrichtung 10 integrierte Anzeigeeinrichtung 20 gewährleistet eine kompakte und bruchsichere Anordnung und benötigt keine zusätzliche Installation von Armaturen wie Manometer, Durchflusswächter oder Durchflussmesser.

## Patentansprüche

1. Absperrvorrichtung (10) mit einer Anzeigeeinrichtung (20) umfassend ein Ventilgehäuse (3) mit mindestens zwei Anschlussbereichen (6) zum Anschliessen an mediumsführenden Rohrleitungen, ein im Ventilgehäuse (3) zwischen den Anschlussbereichen (6) um einer senkrecht zur Strömungsrichtung verlaufenden Achse (X) drehbar gelagertes Absperrglied (1) und ein im Ventilgehäuse (3) um die Drehachse (X) drehbar gelagertes und mit dem Absperrglied (1) verbindbares Verbindungsglied (7), wobei das Verbindungsglied (7) bei der Drehbewegung des Absperrgliedes (1) von einer ersten geöffneten Stellung zu einer zweiten geschlossenen Stellung einen Drehwinkel von etwa 90° beschreibt, **dadurch gekennzeichnet, dass** das Verbindungsglied (7) eine um die Drehachse (X) verlaufende im Wesentlichen zylindrisch ausgebildete und zum Absperrglied (1) hin offenen Ausnehmung (11) aufweist.

2. Absperrvorrichtung (10) mit einer Anzeigeeinrichtung (20) nach dem Anspruch 1, **dadurch gekennzeichnet, dass** in der Ausnehmung (11) im Verbindungsglied (7) als Anzeigeeinrichtung ein Schwimmkörper (14) angeordnet ist.

3. Absperrvorrichtung (10) mit einer Anzeigeeinrichtung (20) nach mindestens einem der Ansprüche 1 oder 2, **dadurch gekennzeichnet, dass** das Absperrglied (1) eine senkrecht zur Strömungsrichtung durch die Absperrvorrichtung (10) und in der Richtung der Drehachse (X) verlaufend angeordnete Bohrung (12) aufweist, wobei die Bohrung (12) in der für das Medium geöffneten Stellung des Absperrgliedes (1) einen offenen Durchgang für das Medium aus der Rohrleitung in die Ausnehmung (11) des Verbindungsgliedes (7) darstellt.

4. Absperrvorrichtung (10) mit einer Anzeigeeinrichtung (20) nach mindestens einem der Ansprüche 1 bis 3, **dadurch gekennzeichnet, dass** das Absperrglied (1) als ein Kugelküken (2) ausgebildet ist.

5. Absperrvorrichtung (10) mit einer Anzeigeeinrichtung (20) nach mindestens einem der Ansprüche 1 bis 4, **dadurch gekennzeichnet, dass** das Verbindungsglied (7) zu mindest in einem aus dem Ventilgehäuse (3) herausragenden Bereich (9) aus einem durchsichtigen Material ausgebildet ist.

6. Absperrvorrichtung (10) mit einer Anzeigeeinrichtung (20) nach mindestens einem der Ansprüche 1 bis 5, **dadurch gekennzeichnet, dass** der Schwimmkörper (14) eine von dem Ventilgehäuse (3) und von dem Betätigungsglied (8) deutlich unterschiedliche Farbe aufweist.

7. Absperrvorrichtung (10) mit einer Anzeigeeinrichtung (20) nach mindestens einem der Ansprüche 1 bis 6, **dadurch gekennzeichnet, dass** das Absperrglied (1) eine weitere Verbindungsbohrung (21) senkrecht zur ersten Bohrung (12) aufweist.

8. Absperrvorrichtung (10) mit einer Anzeigeeinrichtung (20) nach mindestens einem der Ansprüche 1 bis 7, **dadurch gekennzeichnet, dass** das Verbindungsglied (7) eine weitere Überlaufbohrung (17) anschliessend an und senkrecht zur ersten Bohrung (16) aufweist.
